# EUROPEAN PATENT SPECIFICATION

(11) **EP 2 255 424 B1**
(45) Date of publication and mention of the grant of the patent: **22.08.2018**
(21) Application number: 08709865.3
(22) Date of filing: 15.02.2008
(51) Int. Cl.: H02H 3/08, H02H 1/06

(54) **A STANDALONE SELF-SUPPLIED NUMERIC CONTROLLED RELAY**
SELBSTÄNDIGES SELBSTVERSORGTES NUMERISCH GESTEUERTES RELAIS
RELAIS À COMMANDE NUMÉRIQUE AUTONOME

(43) Date of publication of application: 01.12.2010
(73) Proprietor: ABB Schweiz AG, 5400 Baden (CH)
(72) Inventor: SUTHAR, Niraj, 390 007 Vadodara Gujarat (IN); SHAH, Vijay, 390 022 Baroda Gujarat (IN); VYAS, Maulik, 390 016 Vadidara Gujarat (IN); DECK, Bernhard, 79809 Weilheim (DE)
(74) Representative: Zimmermann & Partner Patentanwälte mbB
(86) International application number: PCT/IB2008/000439
(87) International publication number: WO 2009/101463

(56) References cited:
- EP-A2- 0 469 207
- WO-A2-97/18611
- CN-A- 1 738 125
- DE-A1- 3 223 687
- US-A- 4 752 865
- US-A- 5 959 818
- US-A1- 2006 007 627
- US-B1- 6 459 557
- US-B1- 7 304 828
- US-B2- 7 016 174

## Description

### FIELD OF INVENTION

The present invention relates generally to circuit interruption arrangements and more particularly to current measurement and sensing arrangements such as used by circuit breakers and overload/over-current relays which are powered from the circuit path they are arranged to interrupt (self-powered).

### BACKGROUND OF INVENTION

The use of relay is widespread in modern-day residential, commercial and industrial electric systems and they constitute an indispensable component of such systems for providing protection against over-current conditions and earth-fault protection. In power system protection traditionally static auxiliary powered relays for over-current and earth-fault protection are used. In such designs, the source of energy required by an electronics circuit is independent of current sensors. The current sensors in this situation encounter very low and constant burden and small linearity range, generally 20 times of the nominal design current, which facilitates the secondary current waveform to be free of any significant distortion. The current sensors are therefore light in weight and smaller in size. Also the current sensors follow primary high current sensors. Further, for measurement of the current through the current sensors, the control electronics derives the operating power from an auxiliary power supply, which facilitates realization of an active filter design including signal conditioning. The auxiliary power supply supplements usage of dual polarity voltage supply enabling implementation of a simple and active filter conditioning. Further, the high power demand of electronics circuit can be supplied easily. In other words, a design flexibility in terms of components selection and features to be embedded is available.

There are however certain situations, where an installation encounters constraint for supporting auxiliary power supply for the relay operation (for e.g. Ring Main Units installation in urban cities) and hence need arises for a self powered relay per se. However, in case of self powered relays per se, the energy required by the relay electronics circuit is to be supplied with at least one measuring current sensor. It implies interalia that the current sensors must provide measurement of current including power supply. Thus, based on the power consumption requirement of the control electronics, the current sensors VA capacity is influenced. Further, the very approach for power extraction from the current sensor also introduces distortion in the basic current sensor waveform due to dynamic impedance faced by the sensor owing to the requirements for restricting the power dissipation over the operating current range. Such a requirement calls for current sensors with greater VA capacity and greater linearity range. The current sensors required are therefore bulky. To achieve the best relay performance in this situation with least possible current sensor size and VA, optimal balance of the control electronics design hardware and the associated software needs to be achieved.

US patent 7,304,828 discloses an AC/DC intelligent solid state relay/breaker device with current/temperature sensing, time-delay overloads and over-current/over-temperature protection. In this invention, power MOSFETs or other transistors, control a load current. A bypass current sensing path monitors the MOSFET current and causes a shutdown through signal processing in the event of an over-current condition. However, it does not provide for phase and earth fault protection since it is meant to be used as series element in power flow configuration.

US publication 20060007627 discloses an intelligent MOSFET based relay system that responds to a variety of influences. The relay system includes at least one relay, at least one peripheral sensor collecting data related to the relay system, and a control logic section linked to the relay and the sensor. The control logic section is further linked to a control computer via a communication interface. The control logic section includes means for intelligently controlling operation of the relay based upon instructions received from the control computer and data collected via the at least one peripheral sensor and the relay. The system is further adapted for use in a networked arrangement. This patent talks about control computer passing instructions for controlling operation of relay.

Patent no. WO/2007/114951 is in the field of industrial control systems, protection and control mechanisms and/or methodologies for electrical motors and other electrical devices. It can substantially satisfy many of the needs unfulfilled by the prior art mechanisms for the protection and control of electrical devices and can provide for wide-range current measurement, self-calibration, and wide-range line-powered electronics to provide application flexibility and reliability, cost-effectiveness. An overload relay can be employed along with an electromagnetic contactor, consistent with the application, as a component in industrial control systems. However, this patent talks about usage of auxiliary supply with applications for electrical motors.

US patent 7,016,174 describes a system for an electronic trip unit whereby reliable instantaneous protection is provided. A multi-algorithmic approach uses an algorithm to detect bolted faults based on a direct comparison of the current and a threshold value, and an additional algorithm to detect current overloads based on a comparison of a peak-to-peak current and an additional current threshold. However the patent does not provide user configurability.

In the US patent 7,248,451 a power controller is positioned within a current path between the line side and the load side of an electrical circuit. The power controller closes the current path in the presence of a control supply and opens the current path in the absence of the control supply. A power supply electrically connected to the current path provides the control supply. A sensor system receives power from the power supply, monitors the current in the current path and outputs a sensor signal indicative of a current condition within the current path. A logic controller also receives power from the power supply, receives the sensor signal and removes the control supply from the power controller when the sensor signal does not satisfy established criteria. The sensor system may include either or both of imbalance sensors for monitoring the current balance among two or more electrical lines and over-current sensors for monitoring current in individual lines. However, the control of the supply- auxiliary power source indicates that the current relays used in the sensor system do not constitute a self-powered relay per se.

US publication 20060050464 relates generally to a control system, and, more particularly, to a control system having a solid state relay in a hockey puck configuration for controlling power to a power-receiving load. The first bus bar and the second bus bar are configured to include a current sensing portion. It has communication interface adapted for compatibility with a communication selected from the group consisting of a WatBus.TM, Dallas Semiconductor one-wire protocol, a Seriplex, a sensor bus, a DeviceNet.TM. bus, a FMS, Lon Works, a Control Area Network (CAN), an Interbus S, an SDLC, AS-Interface (AS-i), a Local Interconnect bus (LIN-bus), an IEEE-1118 bus, a Profibus, Modbus RTU, an enterprise communication bus including an Ethernet TCP/IP, an Internet, a token ring LAN, an Ethernet LAN, an FDDI network, a private data network, an ISDN, and a VPN. However, this patent talks about solid state relay with variety of custom communication.

US patent 7,031,131 relates to an over-current protection device for detecting a current flowing through a conductor and for shutting of the current when the current exceeds a predetermined threshold value. A current sensor which constitutes an overload protection apparatus and senses a current supplied from a power source to a load is constituted by providing a magnetic sensor having the effect of magnetic impedance (MI), an AC supply means which impresses AC on this sensor, a bias current supply means which supplies a bias current to a bias coil, a peak sensing means which senses the peak or a change in impedance of the magnetic sensor as a change in voltage, and a switch which selects the output of the peak sensing means in accordance with each phase. A holding means which holds switch outputs one after another and an amplification means are provided in common to enable current sensing for each phase. Thus, a range of current sensing is enlarged to reduce power consumption and cost. However this invention uses AC supply to impress the sensor. It also uses bias current supply for biasing bias coil.

US patent 6,888,712 relates to a single protection device, including a transformer, an input circuit, and a switch circuit, suitable for addition to an electrical power system that includes a control panel electrically interconnected with a starter to control an electrical device. The patent talks about starter with varied functional blocks.

US patent 6,421,216 discloses an overcurrent protection system giving rapid response to relatively small overcurrents. It has a sensor element and an interruption element in series between a power source and a load. The sensor element is functionally linked to the circuit interruption element via a control element. When current exceeds a predetermined amount, the sensor element transfers heat to the control element, which causes the circuit interruption element to change from a conducting state to a non-conducting fault state. The control element may include a PTC device. However, the patent talks about thermal considerations-heat transfer for operations and is not based on electrical sensing of current magnitudes through interfacing current transformers.

US patent 6,055,145A describes a microprocessor based overcurrent trip unit which generates trip signals as an adjustable function of current and time, has a visual representation of the trip function on a front panel with 2-color LEDs associated with the trip function serving as indicators of trip conditions when red, and of a selected programmable parameter when green. The green LEDs flash to indicate parameter selected for modification in a program mode and illuminate steady in a view mode. However, it does not provide any indication of source of power.

US patent 6,459,557 discloses a configurable overload relay selectively operable in a single-phase mode of operation and a multi-phase mode of operation configured to sense current flow through power conductors. The relay is further configured to determine a parameter related to the current flow, such as average current, vector sum of phase currents, and current imbalance, based on selection of either the single-phase or multi-phase mode of operation. Regardless of the selected mode of operation, the relay can provide protection for multiple types of power conductor fault conditions, including ground faults, overloads, and phase loss. The relay further can be configured to provide a reporting signal indicative of the value of the determined current-related parameter and/or the occurrence of the fault condition. Thus the patent has two distinct mode of operation.

Patent no. RU2179775 discloses reference-voltage source and 2(two) AND gates whose output is connected to input of final element; its first input is connected to output of OR gate and second input, to one of outputs of signal shaper that functions to record critical overcurrent; other outputs of signal shaper are connected to respective inputs of time-setting circuit and the current sensor is inserted in series with circuit under protection. First inputs of signal shaper are connected to its output through voltage divider and its second ones, to respective levels of reference voltages. In this way device provides for protecting DC and AC power circuits and realizes single- valued current and time settings due to discrete principle of control. However, the patent has protecting DC and AC power circuits with gated logic without any mention of operating source of power.

US patent 4,077,055 provides a self-powered self-contained ground fault protective device including a current monitor, an electronic circuit for amplifying the output of the current monitor, a relay connected to the amplifying circuit and adapted to operate whenever the ground fault current, through the current monitor, rises above a predetermined level, and an interchangeable rating plug including means for activating a circuit board switch. The current monitor, amplifying circuit, and relay are all supported and enclosed by a molded insulating housing. The rating plug is inserted into a socket on the exterior of the housing. However, this patent appears to be more of mechanical plug in construction for ground fault instead of truly self powered relay well suited for phase faults too.

Patent no. EP0469207 discloses a self powered multiple phase circuit protection devices including a plurality of current transformers connected in parallel with each other and adapted to be individually associated with one phase of a multiple phase load and for providing signals representing the current flowing in an associated phase. A switch is adapted to be actuated to interrupt power to the multiple phase loads and a fault determining circuit is connected to the circuit transformers and to the switch for actuating the switch for atleast one predetermined condition of the current signals. However, the functionality disclosed is average current based and thus different from the present invention.

US patent 5,959,818 discloses a method and apparatus for three phase sensing of a polyphase distribution system to provide true RMS signal monitoring capabilities. Each current transformer is provided with a rectifier and a separate burden to not only provide accurate signal representation of the true RMS currents in each phase, but also provide a DC voltage supply to thereby self-power the circuit. Two configurations are disclosed, one in which two CTs sense all three phases. In this configuration, two phases of the three phase system are used as a single primary winding in each current transformer such that each current transformer produces a voltage representation of a sum of two phase currents. A second configuration discloses the use of a current transformer for each phase. In both embodiments, by providing a separate burden and rectifier for each CT, true RMS signal characteristics can be extracted from the produced discrete signals, while at the same time providing a DC voltage supply for self-powering the circuit.

Thus, none of the prior art systems teaches or suggests a self-supplied standalone numeric controlled relay with accurate current measurement, optimum VA-capacity and linearity range adaptable for phase and earth fault protection.

To generate power from a current source, the current waveform must be rectified and energy stored into a capacitor. It can be proven that for a given current by an infinite current source, the full wave rectified current can support only definite amount of power at a definite bus voltage. The bus voltage changes as soon as the power demand changes provided the source current remains constant. Thus, to support a lower setting current, it is required that the power demand of relay electronics circuit is minimum. The full wave rectified current generates only a positive voltage energy source. Generating negative voltage from the positive voltage energy source is loss of energy. This imposes a restriction on dual polarity supply availability for current signal conditioning. Even if dual polarity supply is used, the current shall be measured in differential mode across the current sensor secondary (prior to full wave rectifier). This further complicates the measurement circuit implementation and cost for that reason. One of the suitable ways is to measure current by putting a shunt in series with rectifier circuit.

The secondary current of the current sensor, if interrupted, shall result into destructive high voltage generation across the secondary terminals. The maximum current demand of the relay electronics circuit is limited. As the current source is an uninterruptible source of energy, at higher currents, the energy in the capacitor, after rectifier, increases if the power demand by electronics circuit is less than power input. This results in incremental high voltage generation across the capacitor leading to damage to itself and rest of the electronics circuit. Thus, means for diverting excessive energy back to the source with low impedance, is essential.

As the load on the CT-secondary changes, it's magnetization requirement changes. This results into a variable secondary current. This effect is more prominent at lower line currents when power control switch on times are small.

There have been few products from the applicant, and other competitive manufacturers, which support the truly self power operation. With all the above discussed restrictions or limitations imposed by self powered relay configuration on measurement and power control, it is required to have greater accuracies for protection functions.

### OBJECTS OF THE INVENTION

It is therefore an object of the invention to propose a process of configuring a stand-alone self-supplied numeric controlled relay for providing phase and earth over current protection to electrical systems by accurate current measurement.

Another object of the invention is to propose a process of configuring a stand-alone self-supplied numeric controlled relay for providing phase and earth over current protection to electrical systems by accurate current measurement which exhibits optimum VA-capacity and linearity range.

A still another object of the invention is to propose a process of configuring a stand-alone self-supplied numeric controlled relay for providing phase and earth over current protection to electrical systems by accurate current measurement, which does not require any auxiliary power supply to operate the internal electronic circuit.

A further object of the invention is to propose a process of configuring a stand-alone self-supplied numeric controlled relay for providing phase and earth over current protection to electrical systems by accurate current measurement, which is compact, and derive power from the current sensing transformers.

### SUMMARY OF THE INVENTION

The present invention relates to a process for configuration of a phase and earth over-current protection relay to electrical systems by accurate current measurement. It is a self powered relay and does not require any auxiliary power supply to operate the electronics circuit within. It derives its operating power from the current sensors itself. It requires minimum current in at least single phase to start on. The current is 60mA, which is sum of the phase current through MOSFET irrespective of the individual phase current magnitude. It is suitable where no auxiliary power available as the relay derives power from the current sensing transformers. Current setting range is from 7.2A to 8960A that, is divided in 5 different ranges supported by 5 set of current transformers. It provides earth current measurement through internal soft calculation or external current transformer (Core Balance Current Transformer) with lAmp nominal secondary current. The present invention provides an arrangement for accurate current measurement with control algorithms for power control by providing amplified and conditioned current for optimization between the current necessary to power an electronic circuit and the fidelity of a measured current waveform, so that they are both at acceptable levels at the same time. This invention describes the current sensing and associated algorithm for power control in truly self powered relay.

According to an advantageous example of the invention, the relay senses the phase currents through three phase current sensors.

According to another example of the invention the relay estimates earth current internally through soft calculations.

According to a still another example of the invention the earth current measurement is possible through external earth current interface also. Either of internal or external earth current measurement is possible and is selectable.

In a further example of the invention the reference current for the relay can be set through mechanical DIP switches. If the sensed current exceeds the reference current, the relay releases trip energy after specific time duration depending upon the selected time-current characteristic.

In a still embodiment of the invention, the released energy can be supplied to trip coils of circuit breakers to clear the over current fault.

According to the invention the relay accepts remote tripping command also termed as binary Input, and for every trip generation, the relay sets an indicator termed as flag or flip indicator, which can be reset using push button interface when the system and the relay are healthy and functional.

In case of any internal relay fault (hardware and software) the relay generates an Internal Relay Fault indication.

The relay senses DC offset, inrush current, THD (Total Harmonic Distortion), frequency change (45Hz to 65Hz), and supports as many as eight selectable fault characteristic curves both for phase and earth fault clearance.

The relay is adaptable in Ring Main Units (RMU) within the distribution network, and provides energy release for trip coil used in RMU.

The relay can be used in secondary distribution and in primary distribution as well.

The relay has use in system protection and control, and design concepts as well as algorithms can be adapted for transducers and metering purposes, including signaling and control applications, industrial instrumentation, process automation.

The invention provides different IDMT (Inverse Definite Minimum Time) curves for both phase and earth over current protection including providing remote trip input, unit ready and internal relay fault indications through the LEDs.

The invention also provides phase and earth over current fault indication through a manually resetable electromechanical FLAG, and a coarse current setting through mechanical binary (DIP) switches in base version.

The invention also provides interface for finer settings and data retrieval through battery powered add on human-machine interface (HMI) with keyboard and display, including test inputs for on site testing of individual phase/earth channel and relay functionality up to trip output.

The invention provides fail safe trip release when micro controller fails and phase currents are reaching 20 times the rated current of current transformers. For fault currents above 20 times the rated CT current, the relay releases trip with 40msec delay.

In the present invention, a current measurement and sensing arrangement has been developed using control algorithms including: MOSFET and Darlington pair circuit to control power and protect the electronics circuit, another circuit or a computer/ microprocessor, a power supply including a capacitor arranged to accumulate charge, a current sensing shunt resistor and current sensing circuit. It has a micro-controller to monitor the quality of grid power and same realizes the protection function of the connected equipments.

### BRIEF DESCRIPTION OF THE ACCOMPANYING DRAWINGS:

FIG. 1 shows a block diagram of current sensing relay/switch mechanism, control and display arrangement
FIG. 2 shows a schematic diagram of the process according to the invention.
FIG. 3 shows a flow-chart for the power control according to the invention.
FIG. 4 shows a flow-chart of RMS current estimation according to the invention.
FIG. 5 shows a flow-chart of a protection scheme according to the invention.
Fig. 6 shows indicative diagram for power extraction and current sensing scheme according to the invention.
Fig. 7 shows power distribution scheme according to the invention.

### DESCRIPTION OF THE PREFERRED EMBODIMENTS:

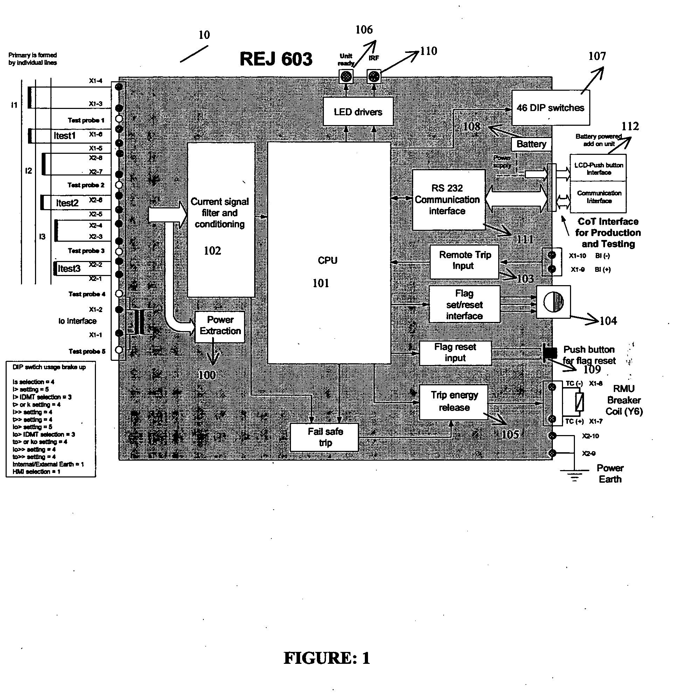

FIG. 1 illustrates a block diagram of power control, current sensing, switch mechanism, control and display arrangement for a self powered relay 10. This relay 10 operates without any auxiliary power supply. It derives power for relay electronics circuit from the current sensors itself.

The power supply **100** is prepared by rectifying current from the current sensors with the help of a full bridge rectifier and storing it in to a bus capacitor. All the three phases are connected in parallel with respect to the capacitor.

The bus capacitor voltage is 24V under normal operating conditions. It gets reduced to +3.3V by using a switching regulator. The +3.3V supply is being used for a micro controller **101** and peripherals. There is another +12V supply made available using a linear regulator from 24V bus voltage. The +12V supply is being used for supplying to the analog current sensing circuit **102,** FLAG operation energy storage **104** and trip coil energy reservoir **105.** From regulated +12V, a reference voltage of +3.3V for the controller **101** gets generated through linear regulator.

There is a shunt in series with the current path of the current transformer (CT) secondary. The shunt converts current signal in to voltage signal. The voltage signal gets divided using a potential divider. There is a spike suppressor across current sensing network **102.** The conditioned current after operational amplifier stages is fed to a built-in A/D converter of the micro-controller **101.** The same voltage signal across the shunt goes through zero cross detection network to the A/D converter to the micro-controller **101.** The micro-controller **101** based on above information monitors line current and line current frequency.

The micro-controller **101** monitors line current and its quality. It detects the dc offset present in current waveform. DC offset arises in the system in case of any fault leading to over current. It also detects in-rush current. In-rush current arises in the system in case of hard switching on of any highly inductive load. It further detects THD present in the system. Harmonic distortion arises in the system due to switching loads like inverter etc. The micro-controller **101** senses over current situations in the system. The over current situation is defined as line current greater than set current fed to the micro-controller **101** through mechanical DIP switches **107.** In case of over current situations, the micro-controller **101** checks for presence of DC offset, in rush current and THD present in the line current. Micro-controller **101** discounts effects of DC offset, in rush current and THD up to 30% to calculate over current conditions. In case of estimated over current condition, the micro-controller **101** releases trip energy to a switch mechanism out side the relay **10** that further isolates the equipment or section of power system from over current fault condition. The micro-controller **101** gets set current information from the DIP switch matrix **107.**

The micro-controller **101** also accepts conditioned signal from remote location **103** through binary input BI section. On receipt of signal from BI section, the micro-controller **101** releases trip energy to the external switch mechanism.

The micro-controller **101** is able to communicate with battery **108** powered add on HMI unit **112.** The same communication port is being exploited for production time testing. This communication port is not available for the user.

The micro-controller **101** issues a FLAG set **104** signal to set externally visible FLAG in the event of trip energy release **105** by any means. It also acknowledges FLAG reset **104** signal from an external push button **109** and resets FLAG.

In case of all healthy condition of hardware and software, the micro-controller **101** enables unit ready LED **106.** In case of unhealthy condition of hardware or software, the micro-controller 101 enables internal relay fault LED **110.**

In the present invention, LPC 2138 micro controller **101** from NXP (earlier Phillips Semiconductors) based on ARM 7 architecture has been used. The controller 101 is programmed to achieve the functionality as described by specialized embedded code involving the above described functions and the basic functionality of product.

Front panel components for base relay include indications through LEDs **106,** bi-settable flag **104,** DIP switches **107,** push button **109** and multi pin connectors. Add-On module interface on the rear side has matched mating connector for interfacing with the base relay. RS232 communication interface **111** is provided to connect the controller **101** with LCD push button interface and communication interface **112.**

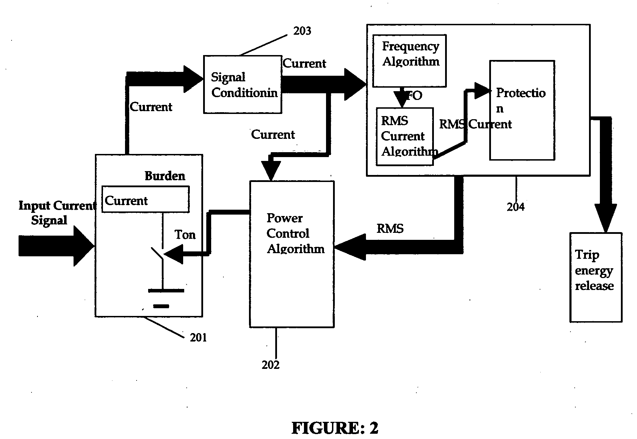

Fig. 2 describes the process according to the invention, which is as follows-

### 1) Block 201: Burden

The burden **201** consists of switching load in series with current sense shunt resistor. When switch is ON, whole load is bypassed and when switch is OFF whole load, in series with shunt resistor for current sensing, appears across current transformer secondary. The current sense resistor converts current signal in to voltage signal.

### 2) Block 202: Power Control Algorithm

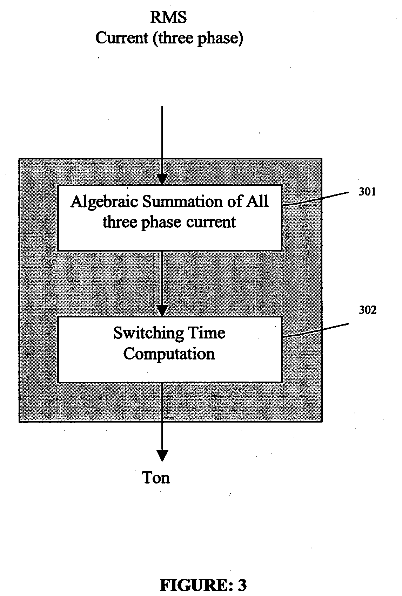

The block **202** decides switching device "ON time" to control power and measure current. A separate fig for power control algorithm is shown in fig. 3. This block takes three phase RMS current as input signal and based on the algebraic sum of all three phase current **301,** control algorithm decides "ON time" or switching time **302** for the switching elements.

### 3) Block 203: Signal conditioning

Only single polarity voltage is generated. Hardware filtration of current signal is not possible due to the various reasons. Only high frequency current spikes can be filtered through ceramic capacitors across the current sense resistors. The sensed currents are passed through three different gain amplifiers to get optimal signal amplitude for measurement over the whole operating current range of 75mA to 5.83A. The same signal across the current sense resistor is used to identify zero cross over. This is required for frequency estimation as well for current measurement algorithms.

### 4) Block 204: Relay Algorithm.

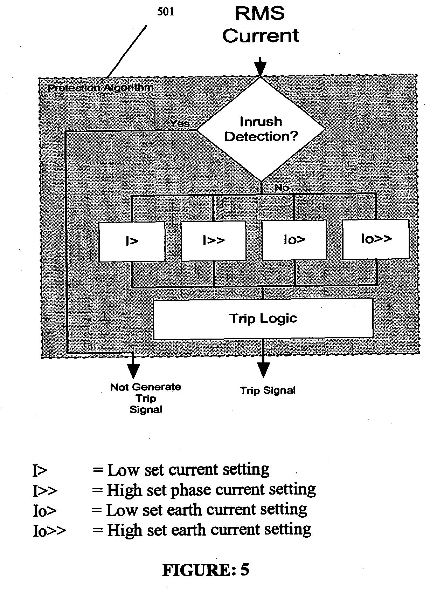

This block **204** contains mainly digital signal processing modules and also contains the protection algorithm (separately shown in fig. 5) and on that basis it generates trip signal. This block contains frequency estimation, RMS Current estimation and protection modules. Based on the frequency estimation whole software synchronizes with the estimated frequency.

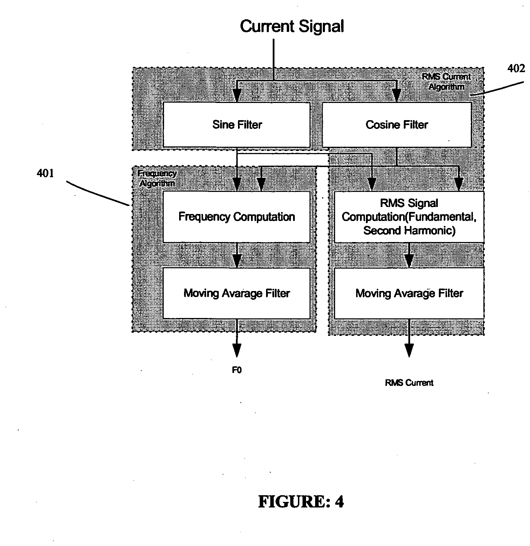

Referring to Fig.4, based on frequency estimation by frequency algorithm **401,** RMS current algorithm **402** computes RMS value of the input current signal, which is the deciding parameter for the power control as well as trip signal generation.

Protection algorithm **501** is shown in Fig.5. Here RMS current algorithm also takes care of DC offset calculation, Inrush current identification & the Total Harmonic Distortion (THD) estimation.

Accurate current measurement in self powered relays using unique current sensing and power control algorithm is discussed below.

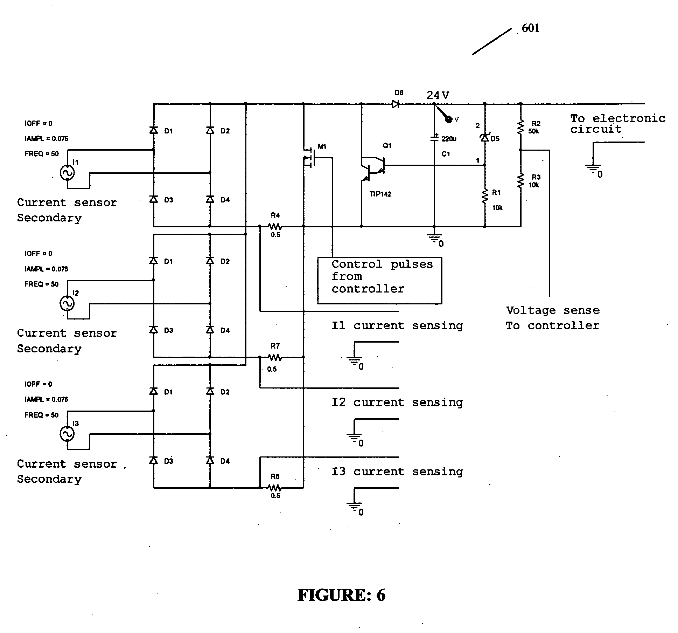

Referring to Fig. 6, indicative diagram for power extraction and current sensing scheme **601,** the three phase currents I1, I2, I3 are rectified to charge the bus capacitor C1 in parallel. The full wave rectified current is sensed with reversed ground. The filtered (noise filter RC) negative current with respect to ground is reversed through front end single supply OP AMP (operational amplifier) stage and conditioned to be able to be read by the controller. As discussed in previous sections the load impedance is variable due to charging and discharging profile of the capacitor voltage. For measurement purpose it is required that the impedance seen by current source remains constant. This is the case when MOSFET M1 is ON. Therefore, current measurement must happen when MOSFET M1 is ON. For measurement the MOSFET M1 is made ON for specific duration (say 100µsec at least) at a rate of 20 samples per cycle. All the three phase currents I1, I2 and I3 are sensed during this period. However, MOSFET M1 ON time can be greater than 100µsec depending upon the source current.

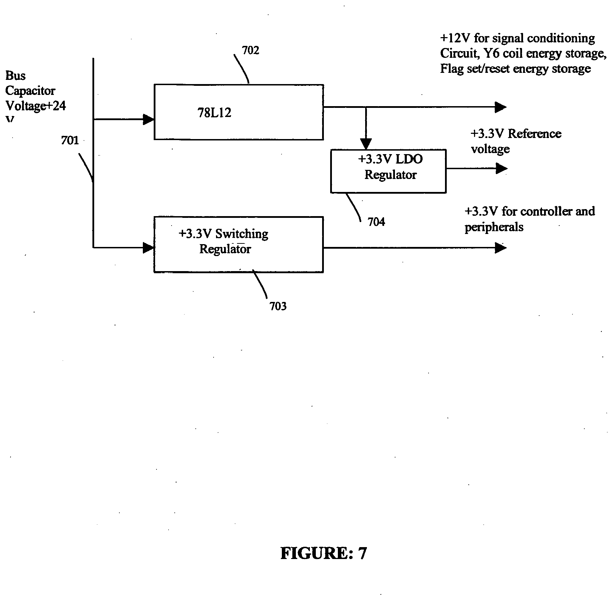

Power distribution system is shown in Fig. 7. The sensed bus voltage via a potential divider is given to the controller. The bus capacitor voltage **701** is 24V under normal operating conditions. The current sensing scheme exploits only single polarity (+ve) supply. The bus voltage is fed to a +12V liner regulator **702** to generate power for analog circuit (current conditioning circuit), the trip release reservoir and trip indicator flag reservoir. The same bus voltage is fed to the switching regulator **703** that generates +3.3V for logic level digital circuits (controller and peripherals). +3.3V linear regulator **704** follows the regulated +12V for +3.3V reference generation.

### Power control:

The power input source is a definite set of current transformers for each phase. At a time, one set of current transformers is used. There could be a possibility that only one of the three phases is available. The electronic circuit must be functional in such condition also. As the output of the current sensor depends upon input current and it cannot be kept open or exposed to high impedance, the current loop must get closed. At the same time, as the current loop cannot be interrupted, the energy transfer is continuous and it increases as the input current increases. If the energy is not controlled or dissipated, the bus voltage increases indefinitely as the power requirement from electronics circuit is limited. This finally results in to failure of capacitor and electronics circuit.

The one of the possible option is to supply excessive current from source with low impedance (low impedance bypass is required to avoid heat dissipation) back to the source. This is done by using very low impedance MOSFET M1 across the bus capacitor C1. The diode D6 is used to avoid bus capacitor energy release through the MOSFET M1 when it is on.

### PWM algorithms for power control:

As the current requirement from electronics load is defined, the voltage level across the bus capacitor is indicative of energy available from source. As load current is constant, power depends upon bus voltage available. As per power demand, the energy level in the capacitor changes with time. This results in variation of capacitor bus voltage. If the power demand is constant, the additional energy results in increment of voltage across the bus capacitor. Similarly, if the power demand is constant and there is reduction in input energy to the bus capacitor, it results in the reduction in voltage level of the bus capacitor. In present case, input current from current sensors for three phases is indicative of energy insurgence from source. This effect is basis for indirect bus voltage control algorithm.

The individual phase current is sensed and based on algebraic sum of three phase current through MOSFET M1 the fixed duty cycle PWM pattern is generated. This avoids unbalanced impedance seen by current transformer for positive and negative half cycle. Such an algorithm controls power dynamically as well as avoids current sensor saturation. With this type of control in actual relay hardware, the bus capacitor voltage is kept greater than 22V. It is then controlled at around 24V by zener diode D5 along with Darlington pair transistor Q1.

For measurement purpose it is required that the impedance seen by current source remains constant. This is the case when MOSFET M1 is ON. Therefore, current measurement must happen when MOSFET M1 is ON. Due to this, the MOSFET M1 is made on for specific duration (say 100µsec) at a rate of 20 samples per cycle. All the three phase currents are sensed during this period.

According to the other embodiments of the present invention, the system has other advantageous feature like indications and push buttons. Green LED is for relay protection function ready indication and red LED is for internal relay fault indication. Bistable flag is for latched trip indication, which is resetable by user using push button. The invention also includes 46 DIP switches divided in 13 different subgroups for the relay settings required by user. There is provision for flag reset without removing front cover and the relay can be reset only when it is powered on and ready. Multi-pin connectors provide add-on module interface by having a communication port/ production testing communication and battery interface to power add-on module via base relay circuit board.

## Claims

1. A process of configuring a standalone self-supplied numeric controlled relay for providing phase and earth over current protection to electrical systems by accurate current measurement, comprising the steps of:
- preparing a power supply by rectifying the current from at least one current transformer by means of a full-bridge rectifier;
- storing the prepared power supply into a bus capacitor (C1), all the three phases of the rectifier being connected in parallel with respect to the capacitor (C1);
- reducing the bus capacitor voltage from 24V to +12V at a first stage by adapting a first linear regulator (702), the +12V being supplied to an analog sensing circuit (102), a trip coil energy reservoir (105), and a FLAG operation energy storage (104);
- reducing the regulated voltage from +12V to +3.3V at a second stage by adapting a second linear regulator (704), the +3.3V being supplied to a microcontroller (101) as reference; and
- providing a switch and a shunt in series with a current path of the current transformer (CT) secondary to convert current signal to voltage signal;
- providing a potential divider for dividing the voltage signal and providing a spike suppressor across the analog sensing circuit (102) and the analog sensing circuit providing a conditioned current, being supplied to the microcontroller (101), including the voltage signal, the microcontroller (101) monitoring line current and line current frequency based on the conditioned current
- wherein the switch is turned "ON" to have the shunt appear across the current transformer secondary for current measurement.

2. The process as claimed in claim 1, wherein the monitoring of line current comprises estimating the over-current condition through sensing by the microcontroller (101) the presence of dc-offset, in-rush current, and THD (Total Harmonic Distortion), and releasing trip energy, in case of over-current condition, to a switch mechanism disposed outside the relay.

3. The process as claimed in claim 1 or 2, wherein the microcontroller (101) releases trip energy on receipt of conditioned signal from remote location in a binary input section.

4. The process as claimed in claim 1, wherein the microcontroller (101) is enabled to communicate with a battery-power add-on HMI unit (112).

5. The process as claimed in any of the preceding claims wherein the microcontroller (101) on release of trip energy issues a flag-set signal and acknowledges a flag-reset signal from an external push button (104) to reset the flag.

6. The process as claimed in any of the preceding claims, wherein the microcontroller (101) enables a LED (106) to indicate unit-ready signal when the hardware and software structure of the relay is in healthy state, and wherein the microcontroller enables a LED (110) to indicate internal-relay fault when the hardware and/or software is in an unhealthy state.

7. The process as claimed in claim 1, wherein the support software structure for the relay provides for power control, signal conditioning, calculation modules for dc offset, in-rush current, and total harmonic distortion, and relay protection.

## Patentansprüche

1. Prozess zum Konfigurieren eines selbständigen, selbstversorgten numerisch gesteuerten Relais, um elektrischen Systemen einen Phasen- und Erdungsüberstromschutz durch genaue Strommessung zu bieten, die folgenden Schritte umfassend:
- Vorbereiten einer Stromversorgung, indem der von mindestens einem Stromtransformator kommende Strom mittels eines Vollbrückengleichrichters gleichgerichtet wird;
- Speichern der vorbereiteten Stromversorgung in einem Buskondensator (C1), wobei alle drei Phasen des Gleichrichters in Bezug auf den Kondensator (C1) parallelgeschaltet sind;
- Senken der Buskondensatorspannung in einer ersten Stufe von 24 V auf +12 V, indem ein erster Linearregler (702) angepasst wird, wobei die +12 V einer analogen Abfühlschaltung (102), einem Magnetspulenenergiespeicher (105) und einem FLAG-Betriebsenergiespeicher (104) zugeführt werden;
- Senken der geregelten Spannung in einer zweiten Stufe von +12 V auf +3,3 V, indem ein zweiter Linearregler (704) angepasst wird, wobei die +3,3 V einem Mikrocontroller (101) als Referenz zugeführt werden; und
- Bereitstellen eines Schalters und eines Nebenwiderstands in Reihe mit einem Strompfad eines sekundären Stromtransformators (CT), um ein Stromsignal in ein Spannungssignal umzuwandeln;
- Bereitstellen eines Potentialteilers, um das Spannungssignal zu teilen, und Bereitstellen eines Spannungsspitzenunterdrückers an der analogen Abfühlschaltung (102), wobei die analoge Abfühlschaltung einen aufbereiteten Strom bereitstellt, der einschließlich des Spannungssignals dem Mikrocontroller (101) zugeführt wird, wobei der Mikrocontroller (101) einen Leitungsstrom und eine Leitungsstromfrequenz überwacht, der bzw. die auf dem aufbereiteten Strom basiert,
- wobei der Schalter eingeschaltet wird, um den Nebenwiderstand am sekundären Stromtransformator zur Strommessung in Erscheinung treten zu lassen.

2. Prozess nach Anspruch 1, wobei die Überwachung des Leitungsstroms umfasst, den Überstromzustand zu schätzen, indem durch den Mikrocontroller (101) das Vorhandensein eines gleichstromversetzten Einschaltstroms und einer THD (gesamten harmonischen Verzerrung) abgefühlt wird, und im Falle eines Überstromzustands eine Auslöseenergie an einen außerhalb des Relais angeordneten Schaltermechanismus freizusetzen.

3. Prozess nach Anspruch 1 oder 2, wobei der Mikrocontroller (101) die Auslöseenergie beim Erhalt eines aufbereiteten Signals von einer entfernt befindlichen Stelle in einem binären Eingabeabschnitt freisetzt.

4. Prozess nach Anspruch 1, wobei es dem Mikrocontroller (101) ermöglicht wird, mit einer batteriegespeisten Zusatz-HMI-Einheit (112) zu kommunizieren.

5. Prozess nach einem der vorhergehenden Ansprüche, wobei der Mikrocontroller (101) beim Freisetzen von Auslöseenergie ein Merker-Setzsignal ausgibt und den Empfang eines Merker-Rücksetzsignals von einem externen Druckknopf (104) zum Rücksetzen des Merkers bestätigt.

6. Prozess nach einem der vorhergehenden Ansprüche, wobei der Mikrocontroller (101) eine LED (106) aktiviert, um ein Signal "Einheit bereit" anzugeben, wenn sich die Hardware- und Softwarestruktur des Relais in einem ordnungsgemäßen Zustand befindet, und wobei der Mikrocontroller eine LED (110) aktiviert, um einen relaisinternen Fehler anzugeben, wenn sich die Hardware und/oder Software in einem nicht ordnungsgemäßen Zustand befindet.

7. Prozess nach Anspruch 1, wobei die Unterstützungssoftwarestruktur für das Relais für Leistungsregelung, Signalaufbereitung, Berechnungsmodule für den gleichstromversetzten Einschaltstrom und die gesamte harmonische Verzerrung, und Relaisschutz sorgt.

## Revendications

1. Procédé destiné à configurer un relais autonome autoalimenté à commande numérique pour fournir à des systèmes électriques une protection de surintensité phase et terre par une mesure précise du courant, comprenant les étapes de :
- préparation d'une alimentation électrique en redressant le courant provenant d'au moins un transformateur de courant au moyen d'un redresseur en pont ;
- stockage de l'alimentation électrique préparée dans un condensateur de bus (C1), toutes les trois phases du redresseur étant connectées en parallèle par rapport au condensateur (C1) ;
- abaissement de la tension de condensateur de bus de 24 V à +12 V à un premier étage en adaptant un premier régulateur linéaire (702), les +12 V étant fournis à un circuit de détection analogique (102), un réservoir d'énergie à bobine de déclenchement (105), et un stockage d'énergie à fonctionnement FLAG (104) ;
- abaissement de la tension régulée de +12 V à +3,3 V à un deuxième étage en adaptant un deuxième régulateur linéaire (704), sachant que les +3,3 V sont fournis comme référence à un microcontrôleur (101) ; et
- mise à disposition d'un commutateur et d'un shunt en série avec un trajet de courant du transformateur de courant (CT) secondaire pour convertir le signal de courant en signal de tension ;
- mise à disposition d'un diviseur de potentiel pour diviser le signal de tension et mise à disposition d'un suppresseur de crête au niveau du circuit de détection analogique (102), le circuit de détection analogique (102) fournissant un courant traité qui est fourni au microcontrôleur (101) conjointement avec le signal de tension, le microcontrôleur (101) surveillant le courant de ligne et la fréquence de courant de ligne sur la base du courant traité,
- sachant que le commutateur est enclenché pour faire intervenir le shunt au niveau du transformateur de courant secondaire pour la mesure du courant.

2. Le procédé selon la revendication 1, sachant que la surveillance du courant de ligne comprend l'estimation de l'état de surintensité via la détection par le microcontrôleur (101) de la présence d'un courant d'appel décalé en courant continu (dc) et d'une THD (distortion harmonique totale) et, en cas d'état de surintensité, la libération d'une énergie de déclenchement vers un mécanisme de commutation disposé à l'extérieur du relais.

3. Le procédé selon la revendication 1 ou 2, sachant que le microcontrôleur (101) libère de l'énergie de déclenchement lors de la réception d'un signal traité provenant d'un endroit distant dans une section d'entrée binaire.

4. Le procédé selon la revendication 1, sachant que le microcontrôleur (101) est mis en état de communiquer avec une unité HMI d'appoint (112) alimentée par batterie.

5. Le procédé selon l'une quelconque des revendications précédentes, sachant que le microcontrôleur (101), lors de la libération d'énergie de déclenchement, émet un signal d'initialisation de drapeau et accuse réception d'un signal de réinitialisation de drapeau provenant d'un bouton-poussoir externe (104) pour réinitialiser le drapeau.

6. Le procédé selon l'une quelconque des revendications précédentes, sachant que le microcontrôleur (101) active une LED (106) pour indiquer un signal « unité prête » lorsque la structure matérielle et logicielle du relais est en bon état de marche, et sachant que le microcontrôleur active une LED (110) pour indiquer un défaut interne de relais lorsque le matériel et/ou le logiciel ne sont pas en bon état de marche.

7. Le procédé selon la revendication 1, sachant que la structure logicielle de support pour le relais fournit une commande de puissance, un traitement de signal, des modules de calcul pour courant d'appel décalé en courant continu (dc) et distortion harmonique totale, et une protection de relais.
